(19)

Europäisches
Patentamt

European
Patent Office

Office européen
des brevets

(11)  **EP 2 627 506 B1**

(12)  **EUROPEAN PATENT SPECIFICATION**

(45) Date of publication and mention
of the grant of the patent:
**28.06.2017 Bulletin 2017/26**

(21) Application number: **11770312.4**

(22) Date of filing: **06.10.2011**

(51) Int Cl.:
***B32B 17/10*** (2006.01)        ***B60J 1/00*** (2006.01)
***B60J 7/00*** (2006.01)

(86) International application number:
**PCT/US2011/055065**

(87) International publication number:
**WO 2012/051038 (19.04.2012 Gazette 2012/16)**

(54) **CHEMICALLY-STRENGTHENED GLASS LAMINATES**

CHEMISCH GEHÄRTETE GLASLAMINATE

STRATIFIÉS DE VERRE RENFORCÉS CHIMIQUEMENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.09.2011 US 201113247215
15.10.2010 US 393546 P**

(43) Date of publication of application:
**21.08.2013 Bulletin 2013/34**

(73) Proprietor: **Corning Incorporated
Corning, New York 14831 (US)**

(72) Inventors:
• **FISHER, William Keith
Suffield
Connecticut 06078 (US)**
• **MOORE, Michael John
Corning
New York 14830 (US)**
• **ROSENBLUM, Steven S.
Ithaca
New York 14850 (US)**

• **SHI, Zhiqiang
Painted Post
New York 14870 (US)**
• **THOMAS, John Christopher
Elmira
New York 14905 (US)**

(74) Representative: **Epping - Hermann - Fischer
Patentanwaltsgesellschaft mbH
Postfach 20 07 34
80007 München (DE)**

(56) References cited:
**CN-Y- 200 978 253      GB-A- 1 339 980
US-A- 3 473 997        US-A- 3 558 415**

• **VARSHNEYA A ED - VARSHNEYA A K:
"Fundamentals of Inorganic Glasses,
Strengthening and Toughening", 1 January 2006
(2006-01-01), FUNDAMENTALS OF INORGANIC
GLASSES, SAN DIEGO, CA : ACADEMIC PRESS,
US, PAGE(S) 513 - 521, XP002563094, ISBN:
978-0-12-714970-7 the whole document**

EP 2 627 506 B1

**Description**

**BACKGROUND**

The present disclosure relates generally to glass laminates, and more particularly to chemically-strengthened glass laminates having low weight, high impact resistance, and sound-damping properties.

Glass laminates can be used as windows and glazings in architectural and transportation applications, including automobiles, rolling stock and airplanes. As used herein, a glazing is a transparent, semi-transparent or translucent part of a wall or other structure. Common types of glazings that are used in architectural and automotive applications include clear and tinted glass, such as laminated glass. Glass laminates comprising plasticized polyvinyl butyral (PVB) sheet, for example, can be incorporated into vehicles such as automobiles, airplanes, and rolling stock as windows, windshields, or sunroofs. In certain applications, glass laminates having high mechanical strength and sound-attenuating properties are desirable in order to provide a safe barrier while reducing sound transmission from external sources.

In many vehicle applications, fuel economy is a function of vehicle weight. It is desirable, therefore, to reduce the weight of glazings for such applications without compromising their strength and sound-attenuating properties. In view of the foregoing, thinner, economical glazings that also possess the durability and sound-damping properties associated with thicker, heavier glazings are desirable.

**SUMMARY**

According to one aspect of the disclosure, there is provided a glass laminate as defined by claim 1. The glass laminate comprises a polymer interlayer having a thickness of at least 0.125 mm that is formed over one major surface of a chemically-strengthened alkali aluminosilicate or alkali aluminoborosilicate glass sheet. The glass sheet has a near-surface region under a state of compressive stress. The compressive stress at a surface of the glass sheet is greater than 300 MPa, and the near surface region extends from a surface of the glass sheet to a depth of layer which, expressed in micrometers, is greater than a value 65-0.06(CS), where CS is the compressive stress at a surface of the glass sheet in MPa. The glass laminate also includes at least a second strengthened alkali aluminosilicate or alkali aluminoborosilicate glass sheet, such as a second chemically-strengthened glass sheet, the thickness of the second glass sheet being substantially equal to the thickness of the first glass sheet such that the respective thicknesses vary by no more than 5% and wherein the thickness of the first glass sheet and the thickness of the second glass sheet is less than 1.0 mm and the total thickness of the glass laminate is from 2 mm to 4 mm.

Additional features and advantages of the invention will be set forth in the detailed description which follows, and in part will be readily apparent to those skilled in the art from that description or recognized by practicing the invention as described herein, including the detailed description which follows, the claims, as well as the appended drawings.

It is to be understood that both the foregoing general description and the following detailed description present embodiments of the invention, and are intended to provide an overview or framework for understanding the nature and character of the invention as it is claimed. The accompanying drawings are included to provide a further understanding of the invention, and are incorporated into and constitute a part of this specification. The drawings illustrate various embodiments of the invention and together with the description serve to explain the principles and operations of the invention.

**BRIEF DESCRIPTION OF THE DRAWINGS**

Fig. 1 is a depth of layer versus compressive stress plot for various glass sheets according to one embodiment;
Fig. 2 is a depth of layer versus compressive stress plot for various glass sheets according to another embodiment;
Fig. 3 is a depth of layer versus compressive stress plot for various glass sheets according to further embodiment;
Fig. 4 is a plot of transmission loss versus frequency for 6mm glass plates having different damping factors;
Fig. 5 is a plot of coincident frequency versus laminate thickness;
Fig. 6 is a plot of transmission loss versus frequency for comparative glass laminates;
Fig. 7 is a plot of transmission loss versus frequency for a comparative glass sheet and glass laminates according to embodiments; and
Fig. 8 is a plot of transmission loss versus frequency for a comparative glass sheet and a glass laminates according to a further embodiment.

## DETAILED DESCRIPTION

The glass laminates disclosed herein comprise one or more chemically-strengthened glass sheets. Suitable glass sheets may be chemically strengthened by an ion exchange process. In this process, typically by immersion of the glass sheet into a molten salt bath for a predetermined period of time, ions within the glass sheet at or near the surface of the glass sheet are exchanged for larger metal ions, for example, from the salt bath. In one embodiment, the temperature of the molten salt bath is about 430°C and the predetermined time period is about eight hours. The incorporation of the larger ions into the glass strengthens the sheet by creating a compressive stress in a near surface region. A corresponding tensile stress is induced within a central region of the glass sheet to balance the compressive stress.

Example ion-exchangeable glasses that are suitable for forming glass laminates are alkali aluminosilicate glasses or alkali aluminoborosilicate glasses, though other glass compositions are contemplated. As used herein, "ion exchangeable" means that a glass is capable of exchanging cations located at or near the surface of the glass with cations of the same valence that are either larger or smaller in size.

One example glass composition comprises $SiO_2$, $B_2O_3$ and $Na_2O$, where $(SiO_2 + B_2O_3) \geq 66$ mol.%, and $Na_2O \geq 9$ mol.%. In an embodiment, the glass sheets include at least 6 wt.% aluminum oxide. In a further embodiment, a glass sheet includes one or more alkaline earth oxides, such that a content of alkaline earth oxides is at least 5 wt.%. Suitable glass compositions, in some embodiments, further comprise at least one of $K_2O$, MgO, and CaO. In a particular embodiment, the glass can comprise 61-75 mol.% $SiO_2$; 7-15 mol.% $Al_2O_3$; 0-12 mol.% $B_2O_3$; 9-21 mol.% $Na_2O$; 0-4 mol.% $K_2O$; 0-7 mol.% MgO; and 0-3 mol.% CaO.

A further example glass composition suitable for forming glass laminates comprises: 60-70 mol.% $SiO_2$; 6-14 mol.% $Al_2O_3$; 0-15 mol.% $B_2O_3$; 0-15 mol.% $Li_2O$; 0-20 mol.% $Na_2O$; 0-10 mol.% $K_2O$; 0-8 mol.% MgO; 0-10 mol.% CaO; 0-5 mol.% $ZrO_2$; 0-1 mol.% $SnO_2$; 0-1 mol.% $CeO_2$; less than 50 ppm $As_2O_3$; and less than 50 ppm $Sb_2O_3$; where 12 mol.% $\leq (Li_2O + Na_2O + K_2O) \leq 20$ mol.% and 0 mol.% $\leq$ (MgO + CaO 10 mol.%.

A still further example glass composition comprises: 63.5-66.5 mol.% $SiO_2$; 8-12 mol.% $Al_2O_3$; 0-3 mol.% $B_2O_3$; 0-5 mol.% $Li_2O$; 8-18 mol.% $Na_2O$; 0-5 mol.% $K_2O$; 1-7 mol.% MgO; 0-2.5 mol.% CaO; 0-3 mol.% $ZrO_2$; 0.05-0.25 mol.% $SnO_2$; 0.05-0.5 mol.% $CeO_2$; less than 50 ppm $As_2O_3$; and less than 50 ppm $Sb_2O_3$; where 14 mol.% $\leq (Li_2O + Na_2O + K_2O) \leq 18$ mol.% and 2 mol.% $\leq$ (MgO + CaO) $\leq 7$ mol.%.

In a particular embodiment, an alkali aluminosilicate glass comprises alumina, at least one alkali metal and, in some embodiments, greater than 50 mol.% $SiO_2$, in other embodiments at least 58 mol.% $SiO_2$, and in still other embodiments at least 60 mol.% $SiO_2$, wherein the ratio $\dfrac{Al_2O_3 + B_2O_3}{\sum \mathrm{mod}\,ifiers} > 1$, wherein the ratio the components are expressed in mol.% and the modifiers are selected from alkali metal oxides. This glass, in particular embodiments, comprises, consists essentially of, or consists of: 58-72 mol.% $SiO_2$; 9-17 mol.% $Al_2O_3$; 2-12 mol.% $B_2O_3$; 8-16 mol.% $Na_2O$; and 0-4 mol.% $K_2O$, wherein the ratio $\dfrac{Al_2O_3 + B_2O_3}{\sum \mathrm{mod}\,ifiers} > 1$.

In another embodiment, an alkali aluminosilicate glass comprises, consists essentially of, or consists of: 61-75 mol.% $SiO_2$; 7-15 mol.% $Al_2O_3$; 0-12 mol.% $B_2O_3$; 9-21 mol.% $Na_2O$; 0-4 mol.% $K_2O$; 0-7 mol.% MgO; and 0-3 mol.% CaO.

In yet another embodiment, an alkali aluminosilicate glass substrate comprises, consists essentially of, or consists of: 60-70 mol.% $SiO_2$; 6-14 mol.% $Al_2O_3$; 0-15 mol.% $B_2O_3$; 0-15 mol.% $Li_2O$; 0-20 mol.% $Na_2O$; 0-10 mol.% $K_2O$; 0-8 mol.% MgO; 0-10 mol.% CaO; 0-5 mol.% $ZrO_2$; 0-1 mol.% $SnO_2$; 0-1 mol.% $CeO_2$; less than 50 ppm $As_2O_3$; and less than 50 ppm $Sb_2O_3$; wherein 12 mol.% $\leq Li_2O + Na_2O + K_2O \leq 20$ mol.% and 0 mol.% $\leq$ MgO + CaO $\leq 10$ mol.%.

In still another embodiment, an alkali aluminosilicate glass comprises, consists essentially of, or consists of: 64-68 mol.% $SiO_2$; 12-16 mol.% $Na_2O$; 8-12 mol.% $Al_2O_3$; 0-3 mol.% $B_2O_3$; 2-5 mol.% $K_2O$; 4-6 mol.% MgO; and 0-5 mol.% CaO, wherein: 66 mol.% $\leq SiO_2 + B_2O_3 + CaO \leq 69$ mol.%; $Na_2O + K_2O + B_2O_3 + MgO + CaO + SrO > 10$ mol.%; 5 mol.% $\leq$ MgO + CaO + SrO $\leq 8$ mol.%; $(Na_2O + B_2O_3) - Al_2O_3 \leq 2$ mol.%; 2 mol.% $\leq Na_2O - Al_2O_3 \leq 6$ mol.%; and 4 mol.% $\leq (Na_2O + K_2O) - Al_2O_3 \leq 10$ mol.%.

The glass, in some embodiments, is batched with 0-2 mol.% of at least one fining agent selected from a group that includes $Na_2SO_4$, NaCl, NaF, NaBr, $K_2SO_4$, KCl, KF, KBr, and $SnO_2$.

In one example embodiment, sodium ions in the glass can be replaced by potassium ions from the molten bath, though other alkali metal ions having a larger atomic radius, such as rubidium or cesium, can replace smaller alkali metal ions in the glass. According to particular embodiments, smaller alkali metal ions in the glass can be replaced by $Ag^+$ ions. Similarly, other alkali metal salts such as, but not limited to, sulfates, halides, and the like may be used in the ion exchange process.

The replacement of smaller ions by larger ions at a temperature below that at which the glass network can relax produces a distribution of ions across the surface of the glass that results in a stress profile. The larger volume of the incoming ion produces a compressive stress (CS) on the surface and tension (central tension, or CT) in the center region of the glass. The compressive stress is related to the central tension by the following relationship:

$$CS = CT\left(\frac{t - 2DOL}{DOL}\right)$$

where $t$ is the total thickness of the glass sheet and DOL is the depth of exchange, also referred to as depth of layer.

According to various embodiments, thin glass laminates comprising one or more sheets of ion-exchanged glass and having a specified depth of layer versus compressive stress profile possess an array of desired properties, including low weight, high impact resistance, and improved sound attenuation.

In one embodiment, a chemically-strengthened glass sheet can have a surface compressive stress of at least 300 MPa, e.g., at least 400, 500, or 600 MPa, a depth of at least about 20 $\mu$m (e.g., at least about 20, 25, 30, 35, 40, 45, or 50 $\mu$m) and/or a central tension greater than 40 MPa (e.g., greater than 40, 45, or 50 MPa) and less than 100 MPa (e.g., less than 100, 95, 90, 85, 80, 75, 70, 65, 60, or 55 MPa).

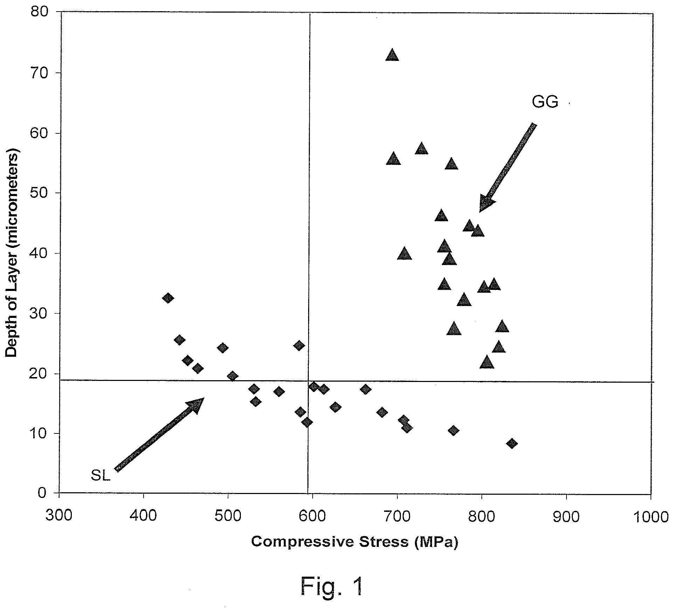

An example embodiment is illustrated in Fig. 1, which shows a depth of layer versus compressive stress plot for various glass sheets. In Fig. 1, data from a comparative soda lime glass are designated by diamonds "SL" while data from chemically-strengthened aluminosilicate glasses are designated by triangles "GG." As shown in the illustrated embodiment, the depth of layer versus surface compressive stress data for the chemically-strengthened sheets can be defined by a compressive stress of greater than about 600 MPa, and a depth of layer greater than about 20 micrometers.

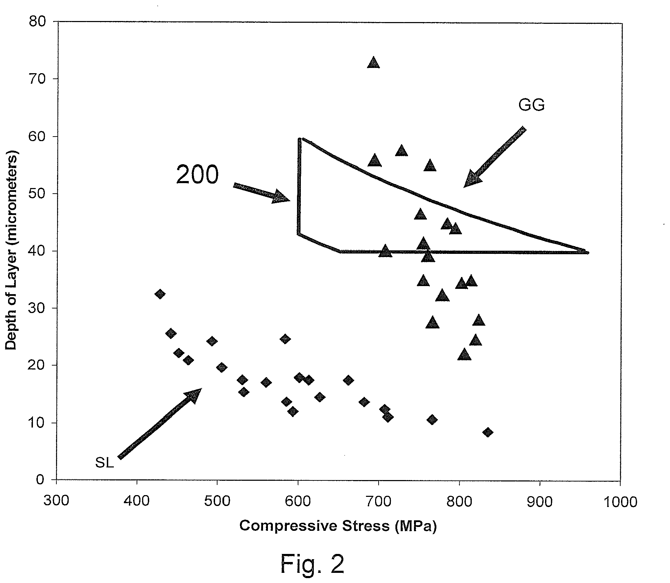

Fig. 2 shows the data of Fig. 1 where a region 200 is defined by a surface compressive stress greater than about 600 MPa, a depth of layer greater than about 40 micrometers, and a tensile stress between about 40 and 65 MPa.

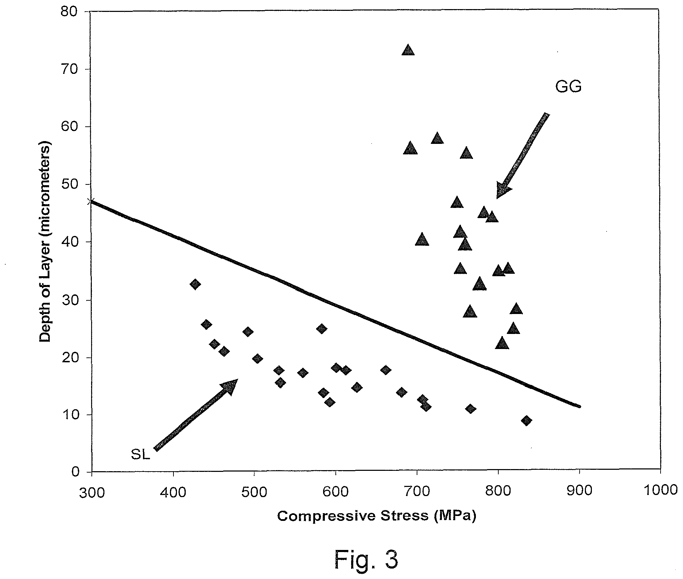

Independently of, or in conjunction with, the foregoing relationships, the chemically-strengthened glass can have depth of layer that is expressed in terms of the corresponding surface compressive stress. In one example, the near surface region extends from a surface of the first glass sheet to a depth of layer (in micrometers) of at least 65-0.06(CS), where CS is the surface compressive stress and has a value of at least 300 MPa. This linear relationship is pictured in Fig. 3, which shows the data of Fig. 1.

In a further example, the near surface region extends from a surface of the first glass sheet to a depth of layer (in micrometers) having a value of at least B-M(CS), where CS is the surface compressive stress and is at least 300 MPa. In the foregoing expression, B can range from about 50 to 180 (e.g., 60, 70, 80, 90, 100, 110, 120, 130, 140, 150, 160 $\pm$ 5), and M can range independently from about -0.2 to -0.02 (e.g., -0.18, -0.16, -0.14, -0.12, -0.10, -0.08, - 0.06, -0.04 $\pm$ -0.01).

A modulus of elasticity of a chemically-strengthened glass sheet can range from about 60 GPa to 85 GPa (e.g., 60, 65, 70, 75, 80 or 85 GPa). The modulus of elasticity of the glass sheet(s) and the polymer interlayer can affect both the mechanical properties (e.g., deflection and strength) and the acoustic performance (e.g., transmission loss) of the resulting glass laminate.

Example glass sheet forming methods include fusion draw and slot draw processes, which are each examples of a down-draw process, as well as float processes. The fusion draw process uses a drawing tank that has a channel for accepting molten glass raw material. The channel has weirs that are open at the top along the length of the channel on both sides of the channel. When the channel fills with molten material, the molten glass overflows the weirs. Due to gravity, the molten glass flows down the outside surfaces of the drawing tank. These outside surfaces extend down and inwardly so that they join at an edge below the drawing tank. The two flowing glass surfaces join at this edge to fuse and form a single flowing sheet. The fusion draw method offers the advantage that, because the two glass films flowing over the channel fuse together, neither outside surface of the resulting glass sheet comes in contact with any part of the apparatus. Thus, the surface properties of the fusion drawn glass sheet are not affected by such contact.

The slot draw method is distinct from the fusion draw method. Here the molten raw material glass is provided to a drawing tank. The bottom of the drawing tank has an open slot with a nozzle that extends the length of the slot. The molten glass flows through the slot/nozzle and is drawn downward as a continuous sheet and into an annealing region. The slot draw process can provide a thinner sheet than the fusion draw process because only a single sheet is drawn through the slot, rather than two sheets being fused together.

Down-draw processes produce glass sheets having a uniform thickness that possess surfaces that are relatively pristine. Because the strength of the glass surface is controlled by the amount and size of surface flaws, a pristine surface that has had minimal contact has a higher initial strength. When this high strength glass is then chemically strengthened, the resultant strength can be higher than that of a surface that has been a lapped and polished. Down-drawn glass may be drawn to a thickness of less than about 2 mm. In addition, down drawn glass has a very flat, smooth surface that can be used in its final application without costly grinding and polishing.

In the float glass method, a sheet of glass that may be characterized by smooth surfaces and uniform thickness is made by floating molten glass on a bed of molten metal, typically tin. In an example process, molten glass that is fed onto the surface of the molten tin bed forms a floating ribbon. As the glass ribbon flows along the tin bath, the temperature is gradually decreased until a solid glass sheet can be lifted from the tin onto rollers. Once off the bath, the glass sheet can be cooled further and annealed to reduce internal stress.

Glass sheets can be used to form glass laminates. As defined herein, a glass laminate comprises at least one chemically-strengthened glass sheet having a polymer interlayer formed over a major surface thereof. The polymer interlayer can comprise a monolithic polymer sheet, a multilayer polymer sheet, or a composite polymer sheet. The polymer interlayer can be, for example, a plasticized polyvinyl butyral (PVB) sheet.

Glass laminates can be adapted to provide an optically transparent barrier in architectural and automotive openings, e.g., automotive glazings. Glass laminates can be formed using a variety of processes. In an example process, one or more sheets of chemically-strengthened glass sheets are assembled in a pre-press with a polymer interlayer, tacked into a pre-laminate, and finished into an optically clear glass laminate.

The assembly, in an example embodiment that comprises two glass sheets, involves laying down a first sheet of glass, overlaying a polymer interlayer such as a PVB sheet, laying down a second sheet of glass, and then trimming the excess PVB to the edges of the glass sheets. The tacking step can include expelling most of the air from the interfaces and partially bonding the PVB to the glass sheets. The finishing step, typically carried out at elevated temperature and pressure, completes the mating of each of the glass sheets to the polymer interlayer.

A thermoplastic material such as PVB may be applied as a preformed polymer interlayer. The thermoplastic layer has a thickness of between 0.125 mm and 1.52 mm (e.g., 0.125, 0.25, 0.375, 0.5, 0.75, or 1 mm). The thermoplastic layer can cover most or, preferably, substantially all of the two opposed major faces of the glass. It may also cover the edge faces of the glass. The glass sheet(s) in contact with the thermoplastics layer may be heated above the softening point of the thermoplastic, such as, for example, at least 5°C or 10°C above the softening point, to promote bonding of the thermoplastic material to the glass. The heating can be performed with the glass ply in contact with the thermoplastic layers under pressure.

Select commercially available polymer interlayer materials are summarized in Table 1, which provides also the glass transition temperature and modulus for each product sample. Glass transition temperature and modulus data were determined from technical data sheets available from the vendor or using a DSC 200 Differential Scanning Calorimeter (Seiko Instruments Corp., Japan) or by ASTM D638 method for the glass transition and modulus data, respectively. A further description of the acrylic/silicone resin materials used in the ISD resin is disclosed in US Patent No. 5,624,763, and a description of the acoustic modified PVB resin is disclosed in Japanese Patent No. 05138840, the entire contents of which are hereby incorporated by reference in their entirety.

**Table 1. Example Polymer Interlayer Materials**

| Interlayer Material | $T_g$ (°C) | Modulus, psi (MPa) |
|---|---|---|
| | | |
| EVA (STR Corp., Enfield, CT) | -20 | 750-900 (5.2-6.2) |
| EMA (Exxon Chemical Co., Baytown, TX) | -55 | <4,500 (27.6) |
| EMAC (Chevron Corp., Orange, TX) | -57 | <5,000 (34.5) |
| PVC plasticized (Geon Company, Avon Lake, OH) | -45 | <1500 (10.3) |
| PVB plasticized (Solutia, St. Louis, MO) | 0 | <5000 (34.5) |
| Polyethylene, Metallocene-catalyzed (Exxon Chemical Co., Baytown, TX) | -60 | <11,000 (75.9) |
| Polyurethane Hard (97 Shore A) | 31 | 400 |
| Polyurethane Semi-rigid (78 Shore A) | -49 | 54 |
| ISD resin (3M Corp., Minneapolis, MN) | -20 | |
| Acoustic modified PVB (Sekisui KKK, Osaka, Japan) | | 140 |
| Uvekol A (liquid curable resins) (Cytec, Woodland Park, NJ) | | |

A modulus of elasticity of the polymer interlayer can range from about 1 MPa to 75 MPa (e.g., about 1, 2, 5, 10, 15, 20, 25, 50 or 75 MPa). At a loading rate of 1 Hz, a modulus of elasticity of a standard PVB interlayer can be about 15 MPa, and a modulus of elasticity of an acoustic grade PVB interlayer can be about 2 MPa.

One or more polymer interlayers may be incorporated into a glass laminate. A plurality of interlayers may provide complimentary or distinct functionality, including adhesion promotion, acoustic control, UV transmission control, and/or IR transmission control.

During the lamination process, the interlayer is typically heated to a temperature effective to soften the interlayer, which promotes a conformal mating of the interlayer to respective surfaces of the glass sheets. For PVB, a lamination temperature can be about 140°C. Mobile polymer chains within the interlayer material develop bonds with the glass surfaces, which promote adhesion. Elevated temperatures also accelerate the diffusion of residual air and/or moisture from the glass-polymer interface.

The optional application of pressure both promotes flow of the interlayer material, and suppresses bubble formation that otherwise could be induced by the combined vapor pressure of water and air trapped at the interfaces. To suppress bubble formation, heat and pressure can be simultaneously applied to the assembly in an autoclave.

Glass laminates can be formed using substantially identical glass sheets or, in alternate embodiments, characteristics of the individual glass sheets such as composition, ion exchange profile and/or thickness can be independently varied to form an asymmetric glass laminate.

Glass laminates can be used to provide beneficial effects, including the attenuation of acoustic noise, reduction of UV and/or IR light transmission, and/or enhancement of the aesthetic appeal of a window opening. The individual glass sheets comprising the disclosed glass laminates, as well as the formed laminates, can be characterized by one or more attributes, including composition, density, thickness, surface metrology, as well as various properties including mechanical, optical, and sound-attenuation properties. Various aspects of the disclosed glass laminates are described herein.

The weight savings associated with using thinner glass sheets can be seen with reference to Table 2, which shows the glass weight, interlayer weight, and glass laminate weight for exemplary glass laminates having an areal dimension of 110 cm x 50 cm and a polymer interlayer comprising a 0.76 mm thick sheet of PVB having a density of 1.069 g/cm$^3$.

Table 2. Physical properties of glass sheet/PVB/glass sheet laminate.

| Thickness (mm) | Glass Weight (g) | PVB weight (g) | Laminate weight (g) |
|---|---|---|---|
| 4 | 5479 | 445 | 11404 |
| 3 | 4110 | 445 | 8664 |
| 2 | 2740 | 445 | 5925 |
| 1.4 | 1918 | 445 | 4281 |
| 1 | 1370 | 445 | 3185 |
| 0.7 | 959 | 445 | 2363 |
| 0.5 | 685 | 445 | 1815 |

As can be seen with reference to Table 2, by decreasing the thickness of the individual glass sheets, the total weight of the laminate can be dramatically reduced. In some applications, a lower total weight translates directly to greater fuel economy.

The glass laminates can be adapted for use, for example, as windows or glazings, and configured to any suitable size and dimension. In embodiments, the glass laminates have a length and width that independently vary from 10 cm to 1 m or more (e.g., 0.1, 0.2, 0.5, 1, 2, or 5 m). Independently, the glass laminates can have an area of greater than 0.1 m$^2$, e.g., greater than 0.1, 0.2, 0.5, 1, 2, 5, 10, or 25 m$^2$.

The glass laminates can be substantially flat or shaped for certain applications. For instance, the glass laminates can be formed as bent or shaped parts for use as windshields or cover plates. The structure of a shaped glass laminate may be simple or complex. In certain embodiments, a shaped glass laminate may have a complex curvature where the glass sheets have a distinct radius of curvature in two independent directions. Such shaped glass sheets may thus be characterized as having "cross curvature," where the glass is curved along an axis that is parallel to a given dimension and also curved along an axis that is perpendicular to the same dimension. An automobile sunroof, for example, typically measures about 0.5 m by 1.0 m and has a radius of curvature of 2 to 2.5 m along the minor axis, and a radius of curvature of 4 to 5 m along the major axis.

Shaped glass laminates according to certain embodiments can be defined by a bend factor, where the bend factor for a given part is equal to the radius of curvature along a given axis divided by the length of that axis. Thus, for the example automotive sunroof having radii of curvature of 2 m and 4 m along respective axes of 0.5 m and 1.0 m, the bend factor along each axis is 4. Shaped glass laminates can have a bend factor ranging from 2 to 8 (e.g., 2, 3, 4, 5, 6, 7, or 8).

Methods for bending and/or shaping glass laminates can include gravity bending, press bending and methods that are hybrids thereof.

In a traditional method of gravity bending thin, flat sheets of glass into curved shapes such as automobile windshields, cold, pre-cut single or multiple glass sheets are placed onto the rigid, pre-shaped, peripheral support surface of a bending fixture. The bending fixture may be made using a metal or a refractory material. In an example method, an articulating bending fixture may be used. Prior to bending, the glass typically is supported only at a few contact points. The glass is heated, usually by exposure to elevated temperatures in a lehr, which softens the glass allowing gravity to sag or slump the glass into conformance with the peripheral support surface. Substantially the entire support surface generally will then be in contact with the periphery of the glass.

A related technique is press bending where flat glass sheets are heated to a temperature corresponding substantially to the softening point of the glass. The heated sheets are then pressed or shaped to a desired curvature between male and female mold members having complementary shaping surfaces. In embodiments, a combination of gravity bending and press bending techniques can be used.

A total thickness of the glass laminate ranges from about 2 mm to 4 mm, where the individual glass sheets (e.g., one or more chemically-strengthened glass sheets) have a thickness of less than 1 mm (e.g., 0.1, 0.2, 0.3, 0.5, or 0.7mm). The thickness of a chemically-strengthened glass sheet is substantially equal to a thickness of the second glass sheet, such that the respective thicknesses vary by no more than 5 %, e.g., less than 5, 4, 3, 2 or 1%. Without wishing to be bound by theory, Applicants believe that a glass laminate comprising opposing glass sheets having substantially identical thicknesses can provide a maximum coincidence frequency and corresponding maximum in the acoustic transmission loss at the coincidence dip. Such a design can provide beneficial acoustic performance for the glass laminate, for example, in automotive applications.

Example glass laminate structures are illustrated in Table 3, where the abbreviation GG refers to a chemically-strengthened aluminosilicate glass sheet, and the term "soda lime" refers to a non-chemically-strengthened glass sheet. As used herein, the abbreviations "SP," "S-PVB" or simply "PVB" may be used for standard grade PVB. The abbreviations "AP" or "A-PVB" are used for acoustic grade PVB.

**Table 3. Example glass laminate structures**

| Sample | Configuration |
|---|---|
| 1 | 2 mm soda lime / 0.76 mm PVB / 2 mm soda lime (comparative) |
| 2 | 2 mm GG /0.76 mm PVB / 2 mm GG |
| 3 | 1.4 mm GG / 0.76 mm PVB /1.4 mm GG |
| 4 | 1 mm GG / 0.76 mm PVB /1 mm GG |
| 5 | 1 mm GG / 0.81 mm acoustic PVB / 1 mm GG |
| 6 | 0.7 mm GG / 0.76 mm PVB / 0.7 mm GG |
| 7 | 0.7 mm GG / 0.38 mm PVB / 0.7 mm GG |
| 8 | 0.7 mm GG /1.143 mm PVB / 0.7 mm GG |
| 9 | 1 mm GG / 0.76 mm PVB / 0.7 mm GG / 0.76 mm PVB /1 mm GG |
| 10 | 1 mm GG / 0.76 mm PVB / 0.7 mm glass / 0.76 mm PVB /1 mm GG |

Applicants have shown that the glass laminate structures disclosed herein have excellent durability, impact resistance, toughness, and scratch resistance. As is well known among skilled artisans, the strength and mechanical impact performance of a glass sheet or laminate can be limited by defects in the glass, including both surface and internal defects. When a glass laminate is impacted, the impact point is put into compression, while a ring or "hoop" around the impact point, as well as the opposite face of the impacted sheet, are put into tension. Typically, the origin of failure will be at a flaw, usually on the glass surface, at or near the point of highest tension. This may occur on the opposite face, but can occur within the ring. If a flaw in the glass is put into tension during an impact event, the flaw will likely propagate, and the glass will typically break. Thus, a high magnitude and depth of compressive stress (depth of layer) is preferable.

Due to chemical strengthening, one or both of the external surfaces of the glass laminates disclosed herein are under compression. In order for flaws to propagate and failure to occur, the tensile stress from an impact must exceed the surface compressive stress at the tip of the flaw. In embodiments, the high compressive stress and high depth of layer of chemically-strengthened glass sheets enable the use of thinner glass than in the case of non-chemically-strengthened glass.

In an embodiment, a glass laminate can comprise inner and outer glass sheets such as chemically-strengthened glass sheets wherein the outer-facing chemically-strengthened glass sheet has a surface compressive stress of at least 300 MPa, e.g., at least 400, 450, 500, 550, 600, 650, 700, 750 or 800 MPa, a depth of at least about 20 $\mu$m (e.g., at least about 20, 25, 30, 35, 40, 45, or 50 $\mu$m) and/or a central tension greater than 40 MPa (e.g., greater than 40, 45, or 50 MPa) and less than 100 MPa (e.g., less than 100, 95, 90, 85, 80, 75, 70, 65, 60, or 55 MPa) and the inner-facing glass sheet (e.g., an inner chemically-strengthened glass sheet) has a surface compressive stress of from one-third to one-half the surface compressive stress of the outer chemically-strengthened glass sheet.

With the magnitude of the tensile stress on the exterior surface being greater than the tensile stress at the interior surface, in this configuration the more moderate tensile stress on the interior surface is sufficient to fracture the inner-facing glass sheet, while the elevated tensile stress on the exterior surface is sufficient to fracture the chemically-strengthened glass sheet as well. As the glass sheets fracture, the PVB interlayer deforms but keeps the impact article from penetrating through the glass laminate. This is a satisfactory response under the ECE R43 headform requirement.

In the case of the disclosed chemically-strengthened glass laminates, the laminate structure can deflect without breaking in response to the mechanical impact much further than thicker monolithic, non-chemically-strengthened glass or thicker, non-chemically-strengthened glass laminates. This added deflection enables more energy transfer to the laminate interlayer, which can reduce the energy that reaches the opposite side of the glass. Consequently, the chemically-strengthened glass laminates disclosed herein can withstand higher external impact energies than monolithic, non- chemically-strengthened glass or non-chemically-strengthened glass laminates of similar thickness.

The impact resistance of Sample 4 from Table 3 was evaluated using a suite of drop tests. The impact tests included (a) a 9.14 meter dart-drop test with a 3.18 mm diameter dart weighing approximately 200 g, (b) a 9.14 meter ball-drop test with a 227 g ball, and (c) a 3.66 meter penetration resistance test with a 2.3 kg ball. The tested samples had a 100% survival rate, where survived means that the dart or ball either bounced back from the surface of the glass laminate without breaking the surface or damaged the surface glass sheet but did not penetrate the entire glass laminate. All of the tested samples exceeded the requirements for laminated, non-windshield glazing (e.g., sunroofs) as set forth by the American National Standards Institute in test ANSI Z26.1.

In addition to their mechanical properties, the acoustic damping properties of the disclosed glass laminates have also been evaluated. As will be appreciated by a skilled artisan, laminated structures can be used to dampen acoustic waves. The chemically-strengthened glass laminates disclosed herein can dramatically reduce acoustic transmission while using thinner (and lighter) structures that also possess the requisite mechanical properties for many glazing applications.

The acoustic performance of laminates and glazings is commonly affected by the flexural vibrations of the glazing structure. Without wishing to be bound by theory, human acoustic response peaks typically between 500 Hz and 5000 Hz, corresponding to wavelengths of about 0.1-1 m in air and 1-10 m in glass. For a glazing structure less than 0.01 m (<10 mm) thick, transmission occurs mainly through coupling of vibrations and acoustic waves to the flexural vibration of the glazing. Laminated glazing structures can be designed to convert energy from the glazing flexural modes into shear strains within the polymer interlayer. In glass laminates employing thinner glass sheets, the greater compliance of the thinner glass permits a greater vibrational amplitude, which in turn can impart greater shear strain on the interlayer. The low shear resistance of most viscoelastic polymer interlayer materials means that the interlayer will promote damping via the high shear strain that will be converted into heat under the influence of molecular chain sliding and relaxation.

One figure of merit describing the sound performance of glass laminates is the coincidence frequency. The coincident frequency is defined as the frequency at which the flexural oscillation wavelength of the glass sheets equals the wavelength of acoustic waves in air. This wavelength matching condition leads to improved coupling between the ambient and flexural acoustic modes and less attenuation at the corresponding frequency.

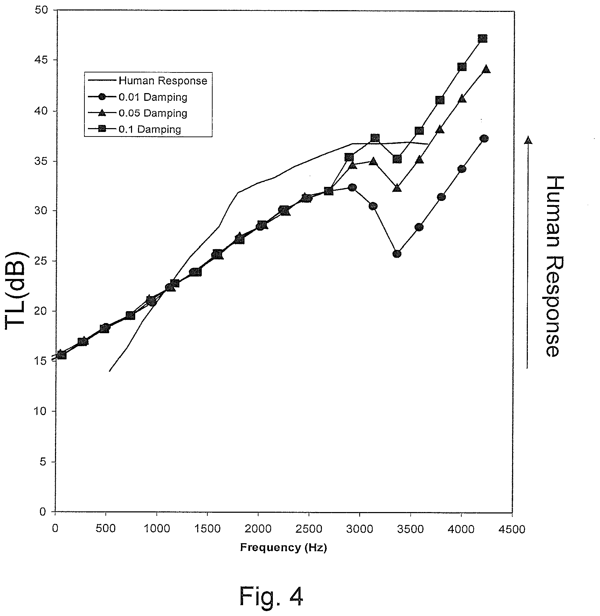

Based on modeled results, the transmission loss for a 6 mm thick glazing panel is shown in Fig. 4 for a variety of different damping coefficients. The symbol-labeled curves represent damping factors of 0.01, 0.05, and 0.1, with a corresponding weighted transmission loss (Rw) of 30, 32 and unspecified, while the solid curve illustrates the sound transmission class (STC) contour (human response). As seen with reference to Fig. 4, the transmission loss increases with increasing frequency, and exhibits a local minimum at a coincidence frequency of about 3500 Hz.

In embodiments, the glass laminate can have a coincident frequency greater than 3000 Hz, e.g., greater than 3000, 3500, 4000, 4500, or 5000 Hz. In such embodiments, the transmission loss increases essentially linearly from 250 Hz to 3000, 3500, 4000, 4500, or 5000 Hz; i.e., without passing through a local minimum within the specified frequency range. According to a further embodiment, the glass laminates can exhibit a transmission loss that does not decrease by more than 1 dB (e.g., by more than 1, 2, 4, or 10 dB) over any 100 Hz interval over a frequency range from 250Hz to 3000, 3500, 4000, 4500, or 5000 Hz.

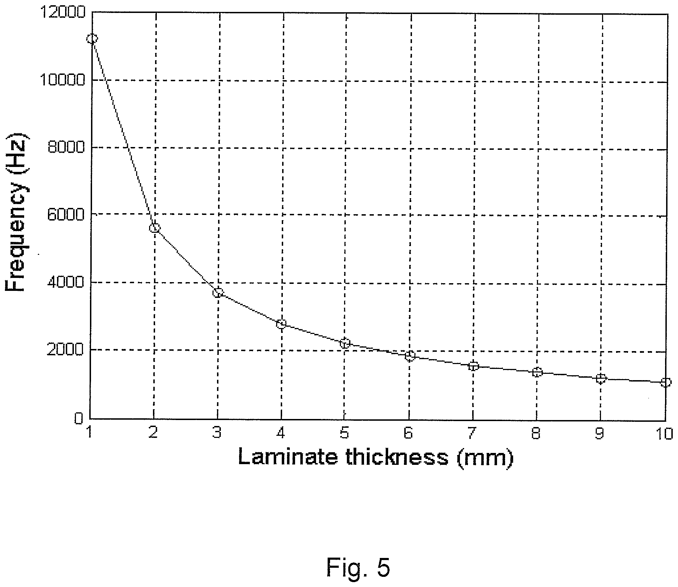

The dependence on the laminate thickness on the coincident frequency is shown in Fig. 5, which illustrates the locus of local minima for laminates ranging in thickness from 1 to 10 mm. As is evident from Fig. 5, the shift in the coincidence frequency to outside of the region of greatest sensitivity (500 Hz to 5000 Hz) coincides with laminates having a thickness of less than 3 mm.

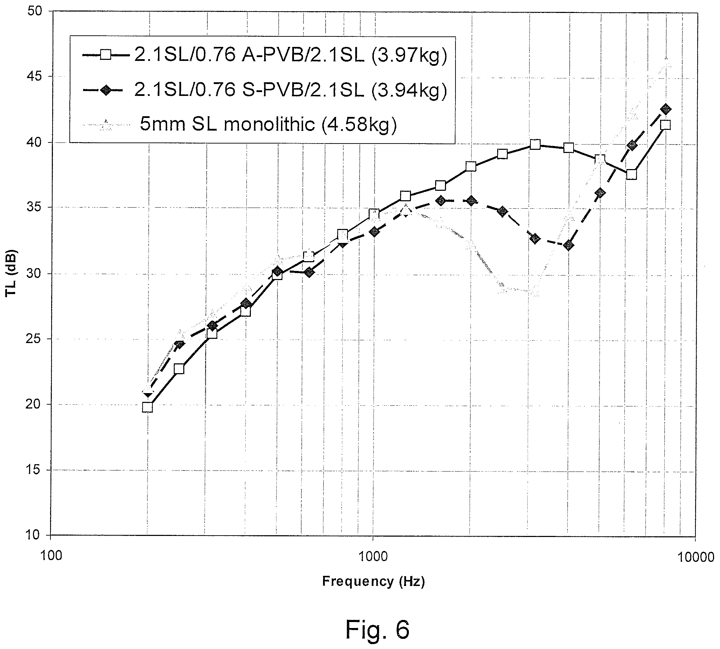

Fig. 6 shows the measured sound transmission loss (TL) of soda lime (SL) laminates with nominal total thickness of 5 mm, i.e., 2.1 mm SL/0.76 mm PVB/2.1 mm SL. The coincidence dip frequency range is 3~4 kHz for a standard PVB laminate and 4~6 kHz for an acoustic PVB laminate. In comparison, the sound transmission loss for a monolithic soda lime glass sheet is 2~3 kHz.

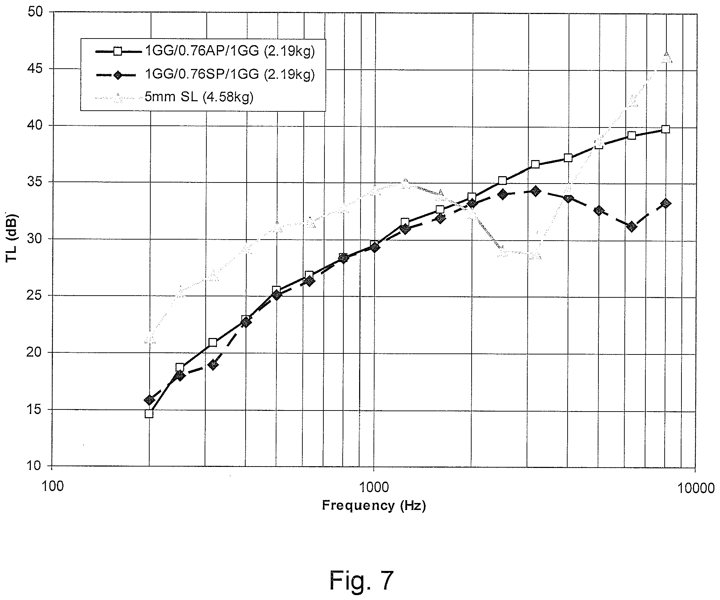

Fig. 7 shows the measured sound transmission loss (TL) of thin chemically-strengthened (GG) laminates. The chemically-strengthened laminates have a nominal total thickness of 2.76 mm (1.0mm GG/0.76 mm PVB/1.0mm GG). The measured sound transmission loss of a 5 mm thick soda lime monolithic sheet is shown for comparison. The coincidence dip frequency range is ~6 kHz for the standard PVB (SP) laminate and >8 kHz for the acoustic PVB (AP) laminate, compared to 2~3 kHz for the monolithic sheet.

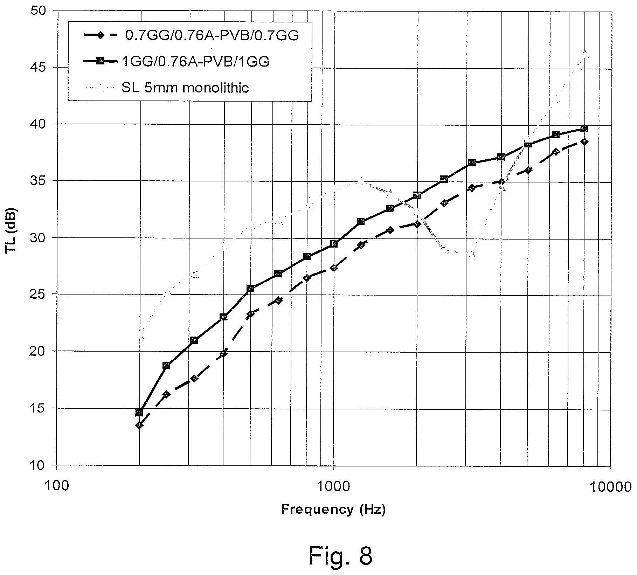

Fig. 8 shows the measured sound transmission loss (TL) of thin and ultra-thin chemically-strengthened (GG) laminates. In Fig. 8, the comparative monolithic soda lime data and the inventive 1.0mm GG/0.76 mm A-PVB/1.0mm GG data correspond to the respective data in Fig. 7. Also shown in Fig. 8 are data for a glass laminate comprising acoustic grade PVB having a pair of chemically-strengthened glass sheets that have a thickness of 0.7 mm. For both the 1.0mm GG/0.76 mm A-PVB/1.0mm GG glass laminate and the 0.7 mm GG/0.76 mm A-PVB/0.7 mm GG glass laminate, the transmission loss increases monotonically over the domain of tested frequencies such that both glass laminates comprising acoustic grade PVB exhibit a coincidence dip greater than 8000 Hz.

Several hypotheses exist that can explain the beneficial acoustic damping performance of thinner chemically-strengthened glass laminates. In one model, the predicted shift in the coincidence frequency can lead to an overall better acoustic rating. While thinner laminates will have a loss in the mass-controlled regime below 1 kHz, the increased coincidence frequency may increase attenuation in the 2-5 kHz regime, and therefore lead to a net benefit in the STC rating. According to a second model, the thinner sheets and lower aspect ratio of the thinner glass laminates makes the laminate structure more compliant, which results in higher shear stain in the polymer interlayer that can lead to higher damping performance.

In addition to the glass laminate thickness, the nature of the glass sheets that comprise the laminates may also influence the sound attenuating properties. For instance, as between chemically-strengthened and non-chemically-strengthened glass sheets, there may be small but significant difference at the glass-polymer interlayer interface that contributes to higher shear strain in the polymer layer. Also, in addition to their obvious compositional differences, aluminosilicate glasses and soda lime glasses have different physical and mechanical properties, including modulus, Poisson's ratio, density, etc., which may result in a different acoustic response.

As used herein, the singular forms "a," "an," and "the" include plural referents unless the context clearly dictates otherwise. Thus, for example, reference to a "metal" includes examples having two or more such "metals" unless the context clearly indicates otherwise.

Ranges can be expressed herein as from "about" one particular value, and/or to "about" another particular value. When such a range is expressed, examples include from the one particular value and/or to the other particular value. Similarly, when values are expressed as approximations, by use of the antecedent "about," it will be understood that the particular value forms another aspect. It will be further understood that the endpoints of each of the ranges are significant both in relation to the other endpoint, and independently of the other endpoint.

Unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is no way intended that any particular order be inferred.

It is also noted that recitations herein refer to a component of the present invention being "configured" or "adapted to" function in a particular way. In this respect, such a component is "configured" or "adapted to" embody a particular property, or function in a particular manner, where such recitations are structural recitations as opposed to recitations of intended use. More specifically, the references herein to the manner in which a component is "configured" or "adapted to" denotes an existing physical condition of the component and, as such, is to be taken as a definite recitation of the structural characteristics of the component.

**Claims**

1. A glass laminate comprising:

  a first chemically-strengthened glass sheet comprising alkali aluminosilicate or alkali aluminoborosilicate glass and having a near-surface region under a compressive stress,
  wherein the compressive stress (CS) at a surface of the first glass sheet is greater than 300 MPa, and the near surface region extends from a surface of the first glass sheet to a depth of layer (in micrometers) having a value of at least 65-0.06(CS) where CS is the surface compressive stress in MPa;
  a polymer interlayer formed over a first major surface of the first glass sheet having a thickness of at least 0.125 mm; and
  a second strengthened glass sheet separated by the polymer interlayer from the first chemically-strengthened glass sheet, the second glass sheet comprising alkali aluminosilicate or alkali aluminoborosilicate glass having a near-surface region under a compressive stress,
wherein the thickness of the second glass sheet is substantially equal to the thickness of the first glass sheet such that the respective thicknesses vary by no more than 5%, and
**characterised in that** the thickness of the first glass sheet is less than 1.0 mm and the thickness of the second glass sheet is less than 1.0 mm; and
**in that** the total thickness of the glass laminate is from 2 mm to 4 mm.

2. The glass laminate according to claim 1, wherein the compressive stress (CS) at a surface of the first glass sheet is greater than 400 MPa.

3. The glass laminate according to claim 1, wherein the compressive stress (CS) at a surface of the first glass sheet is greater than 600 MPa and the depth of layer is at least 20 micrometers.

4. The glass laminate according to claim 1, wherein the first glass sheet has a central region under a tensile stress (CT), wherein 40 MPa < CT < 100 MPa.

5. The glass laminate according to claim 1, wherein the second glass sheet is a chemically-strengthened glass sheet and a compressive stress (CS) at a surface of the second glass sheet is greater than 300 MPa, and the near surface region extends from a surface of the second glass sheet to a depth of layer (in micrometers) of at least 65-0.06(CS) where CS is the surface compressive stress in MPa.

6. The glass laminate according to claim 1, wherein a composition of the first glass sheet includes one or more alkaline earth oxides, such that a content of alkaline earth oxides is at least 5 wt.%.

7. The glass laminate according to claim 1, wherein the glass laminate has at least one linear dimension greater than 0.1 m.

8. The glass laminate according to claim 1, wherein the glass laminate has a radius of curvature of at least 2 m.

9. The glass laminate according to claim 1, wherein the glass laminate has a transmission loss that does not decrease by more than 1 dB over any 100 Hz interval over a frequency range from 250 to 5000 Hz.

10. An automotive glazing comprising the glass laminate according to claim 1.


**Patentansprüche**

1. Glaslaminat, Folgendes umfassend:

einen ersten, chemisch verstärkten Glasflächenkörper, der Alkalialuminiumsilikat- oder Alkalialuminiumborsilikatglas umfasst und einen unter Druckbelastung stehenden oberflächennahen Bereich hat,
wobei die Druckbelastung (CS) an einer Obrfläche des ersten Glasflächenkörpers höher als 300 MPa ist und sich der oberflächennahe Bereich von einer Oberfläche des ersten Glasflächenkörpers zu einer Schichttiefe (in Mikrometern) mit einem Wert von mindestens 65-0,06 (CS) erstreckt, wobei CS die Oberflächendruckbelastung in MPa ist;
eine Polymerzwischenschicht, die über einer ersten Hauptoberfläche des ersten Glasflächenkörpers mit einer Dicke von mindestens 0,125 mm ausgebildet ist; und
einen vom ersten, chemisch verstärkten Glasflächenkörper durch die Polymerzwischenschicht getrennten zweiten verstärkten Glasflächenkörper, wobei der zweite Glasflächenkörper Alkalialuminiumsilikat- oder Alkalialuminiumborsilikatglas umfasst und einen unter Druckbelastung stehenden oberflächennahen Bereich hat,
wobei die Dicke des zweiten Glasflächenkörpers im Wesentlichen gleich der Dicke des ersten Glasflächenkörpers ist, so dass die jeweiligen Dicken um nicht mehr als 5% variieren, und
**dadurch gekennzeichnet, dass** die Dicke des ersten Glasflächenkörpers weniger als 1,0 mm beträgt, und die Dicke des zweiten Glasflächenkörpers weniger als 1,0 mm beträgt; und
dass die Gesamtdicke des Glaslaminats 2 mm bis 4 mm beträgt.

2. Glaslaminat nach Anspruch 1, wobei die Druckbelastung (CS) an einer Oberfläche des ersten Glasflächenkörpers höher als 400 MPa ist.

**3.** Glaslaminat nach Anspruch 1, wobei die Druckbelastung (CS) an einer Oberfläche des ersten Glasflächenkörpers höher als 600 MPa ist und die Schichttiefe mindestens 20 Mikrometer beträgt.

**4.** Glaslaminat nach Anspruch 1, wobei der erste Glasflächenkörper einen unter Zugspannung (CT) stehenden zentralen Bereich hat, wobei 40 MPa < CT < 100 MPa.

**5.** Glaslaminat nach Anspruch 1, wobei es sich bei dem zweiten Glasflächenkörper um einen chemisch verstärkten Glasflächenkörper handelt und eine Druckbelastung (CS) an einer Oberfläche des zweiten Glasflächenkörpers höher als 300 MPa ist, und sich der oberflächennahe Bereich von einer Oberfläche des zweiten Glasflächenkörpers zu einer Schichttiefe (in Mikrometern) von mindestens 65-0,06(CS) erstreckt, wobei CS die Oberflächendruckbelastung in MPa ist.

**6.** Glaslaminat nach Anspruch 1, wobei eine Zusammensetzung des ersten Glasflächenkörpers ein oder mehrere Erdalkalioxid/e enthält, und zwar so, dass ein Gehalt an Erdalkalioxiden mindestens 5 Gew.-% beträgt.

**7.** Glaslaminat nach Anspruch 1, wobei das Glaslaminat mindestens ein Längenmaß von über 0,1 m hat.

**8.** Glaslaminat nach Anspruch 1, wobei das Glaslaminat einen Krümmungsradius von mindestens 2 m hat.

**9.** Glaslaminat nach Anspruch 1, wobei das Glaslaminat eine Durchgangsdämpfung hat, die um nicht mehr als 1 dB über jedes 100 Hz-Intervall über einen Frequenzbereich von 250 bis 5000 Hz abnimmt.

**10.** Fahrzeugverglasung, die das Glaslaminat nach Anspruch 1 umfasst.

## Revendications

**1.** Stratifié de verre comprenant :

une première feuille de verre renforcée chimiquement comprenant du verre d'aluminosilicate alcalin ou d'aluminoborosilicate alcalin et présentant une région proche de la surface sous contrainte de compression, sachant que la contrainte de compression (CS) au niveau d'une surface de la première feuille de verre est supérieure à 300 MPa, et la région proche de la surface s'étend d'une surface de la première feuille de verre à une profondeur de couche (en micromètres) ayant une valeur d'au moins 65-0,06 (CS), où CS est la contrainte de compression de surface en MPa ;
une couche intermédiaire polymère formée sur une première surface principale de la première feuille de verre ayant une épaisseur d'au moins 0,125 mm ; et
une deuxième feuille de verre renforcée séparée de la première feuille de verre renforcée chimiquement par la couche intermédiaire polymère, la deuxième feuille de verre comprenant du verre d'aluminosilicate alcalin ou d'aluminoborosilicate alcalin et présentant une région proche de la surface sous contrainte de compression, sachant que l'épaisseur de la deuxième feuille de verre est sensiblement égale à l'épaisseur de la première feuille de verre de sorte que les épaisseurs respectives ne varient pas de plus de 5%, et
**caractérisé en ce que** l'épaisseur de la première feuille de verre est inférieure à 1,0 mm et l'épaisseur de la deuxième feuille de verre est inférieure à 1,0 mm ; et
**en ce que** l'épaisseur totale du stratifié de verre est de 2 mm à 4 mm.

**2.** Le stratifié de verre selon la revendication 1, sachant que la contrainte de compression (CS) au niveau d'une surface de la première feuille de verre est supérieure à 400 MPa.

**3.** Le stratifié de verre selon la revendication 1, sachant que la contrainte de compression (CS) au niveau d'une surface de la première feuille de verre est supérieure à 600 MPa et la profondeur de couche est d'au moins 20 micromètres.

**4.** Le stratifié de verre selon la revendication 1, sachant que la première feuille de verre présente une région centrale sous contrainte de traction (CT), sachant que 40 MPa < CT < 100 MPa.

**5.** Le stratifié de verre selon la revendication 1, sachant que la deuxième feuille de verre est une feuille de verre renforcée chimiquement et une contrainte de compression (CS) au niveau d'une surface de la deuxième feuille de verre est supérieure à 300 MPa, et la région proche de la surface s'étend d'une surface de la deuxième feuille de verre à une profondeur de couche (en micromètres) d'au moins 65-0,06 (CS), où CS est la contrainte de compression de surface en MPa.

6. Le stratifié de verre selon la revendication 1, sachant qu'une composition de la première feuille de verre inclut un ou plusieurs oxydes alcalino-terreux, de sorte qu'une teneur en oxydes alcalino-terreux soit d'au moins 5% en poids.

7. Le stratifié de verre selon la revendication 1, sachant que le stratifié de verre a au moins une dimension linéaire supérieure à 0,1 m.

8. Le stratifié de verre selon la revendication 1, sachant que le stratifié de verre a un rayon de courbure d'au moins 2 m.

9. Le stratifié de verre selon la revendication 1, sachant que le stratifié de verre a une perte de transmission qui ne diminue pas de plus de 1 dB sur tout intervalle de 100 Hz sur une plage de fréquence de 250 à 5000 Hz.

10. Vitrage d'automobile comprenant le stratifié de verre selon la revendication 1.

Fig. 1

Fig. 2

EP 2 627 506 B1

Fig. 3

EP 2 627 506 B1

Fig. 4

Fig. 5

EP 2 627 506 B1

Fig. 6

Fig. 7

Fig. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5624763 A

- JP 05138840 B